(19) Europäisches Patentamt / European Patent Office / Office européen des brevets

(11) **EP 3 629 318 B1**

(12) **EUROPEAN PATENT SPECIFICATION**

(45) Date of publication and mention
of the grant of the patent:
**01.11.2023 Bulletin 2023/44**

(21) Application number: **19199523.2**

(22) Date of filing: **25.09.2019**

(51) International Patent Classification (IPC):
**G09G 3/20** *(2006.01)*       **G09G 5/10** *(2006.01)*
**G09G 3/3225** *(2016.01)*

(52) Cooperative Patent Classification (CPC):
**G09G 3/20; G09G 3/3225; G09G 5/10;**
G09G 2320/0233; G09G 2320/045;
G09G 2320/048; G09G 2320/0626; G09G 2354/00

(54) **METHOD AND APPARATUS FOR COMPENSATING OPERATING PARAMETER OF DISPLAY CIRCUIT**

VERFAHREN UND VORRICHTUNG ZUR KOMPENSATION DES BETRIEBSPARAMETERS EINER ANZEIGESCHALTUNG

PROCÉDÉ ET APPAREIL DE COMPENSATION D'UN PARAMÈTRE DE FONCTIONNEMENT D'UN CIRCUIT D'AFFICHAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2018 CN 201811126004**

(43) Date of publication of application:
**01.04.2020 Bulletin 2020/14**

(73) Proprietor: **Beijing Xiaomi Mobile Software Co., Ltd.**
**Beijing 100085 (CN)**

(72) Inventor: **Zhang, Yuan**
**Beijing, Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**US-B1- 8 519 971**

**Description**

**TECHNICAL FIELD**

The present disclosure relates to the technical field of display, and more particularly to a method and an apparatus for compensating an operating parameter of a display circuit.

**BACKGROUND**

With the development of mobile terminals, the full-screen has gradually become the trend of the front surface design of a mobile terminal. When designing a full-screen mobile terminal, a distance sensor P-sensor, which is usually provided on the front surface of the mobile terminal, has been a challenge to manufacturers for improving the screen ratio in the front surface. In the related art, the P-sensor may be disposed under the display screen, and the P-sensor may transmit an infrared light signal through the display screen and receive an infrared light signal reflected from the outside to obtain the distance between an external object and the terminal. Since the infrared light signal emitted by the P-sensor is usually infrared light having a wavelength of less than or equal to 1000 nm. The transistor used in an active-matrix organic light-emitting diode (AMOLED) screen is sensitive to the infrared light with wavelength in this range. Under the interference of the infrared light in this range, the organic light-emitting material of the transistor corresponding to the P-sensor on the display may be damaged, resulting in reduced brightness of the area on the display corresponding to the P-sensor, thereby reducing the display effect and reducing the user experience.

D1 (US8519971 B1) provides techniques for reflowing content around obscuring objects. For instance, in one example the techniques may render content on a display of a handheld electronic device before detecting that a user's grasp of the device obscures at least a portion of the content. Thereafter, and in response, the device may reflow the content around the grasp of the user, thus allowing the user to consume the content without the need to alter her grasp when she reaches the obscured portion of the content. In some instances, the device includes a touch-sensitive display that recognizes the grasp that obscures the content. In other instances, the device may recognize that the grasp obscures the content via a camera, a strain gauge, a light sensor, or in any other suitable manner.

**SUMMARY**

In order to overcome the problems in the related art, embodiments of the present disclosure provide a method and an apparatus for compensating an operating parameter of a display circuit. The technical solution is defined in the appended set of claims.

According to a first aspect of the embodiments of the present disclosure, there is provided a method for compensating an operating parameter of a display circuit, which is applied to an electronic device including a display screen and a distance sensor disposed under the display screen, and the method including:

acquiring an operating parameter of a target display circuit on the display screen, the operating parameter is an operating voltage of the target display circuit;

acquiring an operation time period of the distance sensor; the number of turned-on times of the distance sensor is accumulated each time the distance sensor is turned on, and the operation time period of the distance sensor is acquired according to the accumulated number of turned-on times and a preset value of a turned-on time period of the distance sensor;

acquiring a compensation parameter of the distance sensor according to the operation time period, the compensation parameter of the distance sensor being positively correlated to the operation time period; a query is performed in a compensation parameter database according to the operation time period, and the compensation parameter of the distance sensor is determined according to the query result, whereby the compensation parameter database indicates a correspondence relationship between compensation parameters and operation time periods; and

compensating the operating parameter of the target display circuit according to the compensation parameter of the distance sensor to acquire a compensated operating parameter of the target display circuit, the compensation parameter of the distance sensor and the operating parameter of the target display circuit are substituted into a preset compensation algorithm of the distance sensor for calculation, and the compensated operating parameter of the target display circuit is acquired according to the calculation result, or a query is performed in a sensor compensation database according to the compensation parameter of the distance sensor and the operating parameter of the target display circuit, and the compensated operating parameter of the target display circuit is acquired according to the query result, whereby the sensor compensation database indicates a correspondence relationship among compensation parameters of the distance sensor, operating parameters of the target display circuit and compensated operating parameters of the target display circuit..

In the technical solution provided by the embodiment of the present disclosure, an operating parameter of a target display circuit at a position on a display screen corresponding to the position of the distance sensor is acquired. The target display circuit may be understood as a display circuit that may be influenced or damaged on the display screen when the distance sensor performs distance measurement. An operation time period of the distance sensor is acquired, and a compensation parameter of the distance sensor is acquired according to the operation time period. The compensation parameter of the distance sensor is positively correlated to the operation time period, therefore, the compensation parameter of the distance sensor can reflect the influence or damage caused to the target display circuit during the distance measurement performed by the distance sensor. The operating parameter of the target display circuit is compensated according to the compensation parameter of the distance sensor to acquire a compensated operating parameter of the target display circuit. Then, when the electronic device controls the target display circuit to display according to the compensated operating parameter, the influence or damage caused to the target display circuit by the distance sensor can be compensated, such that the display effect will not reflect the influence or damage caused to the target display circuit by the distance sensor, thereby improving the user experience.

In an embodiment, the method further includes:

acquiring a mura compensation parameter of the target display circuit;
compensating the operating parameter of the target display circuit according to the compensation parameter of the distance sensor to acquire a compensated operating parameter of the target display circuit includes:
compensating the operating parameter of the target display circuit according to the compensation parameter of the distance sensor and the mura compensation parameter of the target display circuit to acquire the compensated operating parameter of the target display circuit.

In an embodiment, the operating parameter of the target display circuit includes an operating voltage $V_{data}$ of the target display circuit, a brightness value $Br$ of the target display circuit, a gamma value $\gamma$ of the target display circuit, and an operating voltage $V_{max}$ at the maximum brightness value of the target display circuit; and

compensating the operating parameter of the target display circuit according to the compensation parameter of the distance sensor to acquire a compensated operating parameter of the target display circuit includes:
acquiring a compensated operating voltage $V_c$ of the target display circuit according to

$$V_c = V_{data} + \left(\frac{(Br*m+n)}{65025}\right)^{\gamma} * \left(\frac{Br}{255}\right) * V_{max} * V_{data}$$

, where $m$ is a constant, and $n$ is the compensation parameter of the distance sensor.

In an embodiment, acquiring a compensation parameter of the distance sensor according to the operation time period includes:

when the operation time period is greater than or equal to 100 hours and less than 200 hours, determining the compensation parameter of the distance sensor as $n = 0.8458$;
when the operation time period is greater than or equal to 200 hours and less than 300 hours, determining the compensation parameter of the distance sensor as $n = 1.8458$; and
when the operation time period is greater than or equal to 300 hours, determining the compensation parameter of the distance sensor as $n = 2.8458$.

In an embodiment, the constant $m = 0.0009754$.

According to a second aspect of the embodiments of the present disclosure, there is provided an apparatus for compensating an operating parameter of a display circuit, which is applied to an electronic device including a display screen and a distance sensor disposed under the display screen, and the apparatus including:

an operating-parameter acquiring module configured to acquire an operating parameter of a target display circuit on the display screen, the target display circuit being disposed at a position corresponding to a position of the distance sensor;
an operation-time-period acquiring module configured to acquire an operation time period of the distance sensor;
a sensor-compensation-parameter acquiring module configured to acquire a compensation parameter of the distance sensor according to the operation time period, the compensation parameter of the distance sensor being positively correlated to the operation time period; and
an operating-parameter compensating module configured to compensate the operating parameter of the target display circuit according to the compensation parameter of the distance sensor to acquire a compensated operating parameter of the target display circuit.

In an embodiment, the apparatus further includes:

a mura-compensation-parameter acquiring module configured to acquire a mura compensation parameter of the target display circuit;
the operating-parameter compensating module includes:
a first compensating sub-module configured to compensate the operating parameter of the target display circuit according to the compensation parameter of the distance sensor and the mura compensation parameter of the target display circuit to acquire the compensated operating parameter of the target display circuit.

In an embodiment, the operating parameter of the target display circuit includes an operating voltage $V_{data}$ of the target display circuit, a brightness value $Br$ of the target display circuit, a gamma value $\gamma$ of the target display circuit, and an operating voltage $V_{max}$ at the maximum brightness value of the target display circuit; and

the operating-parameter compensating module includes:
a second compensating sub-module configured to acquire a compensated operating voltage $V_c$ of the target display circuit according to
$$V_c = V_{data} + \left( \frac{(Br*m+n)}{65025} \right)^{\gamma} * (\frac{Br}{255}) * V_{max} * V_{data}$$
, where $m$ is a constant, and $n$ is the compensation parameter of the distance sensor.

In an embodiment, the sensor-compensation-parameter acquiring module includes:

a first sensor-compensation-parameter acquiring sub-module configured to, when the operation time period is greater than or equal to 100 hours and less than 200 hours, determine the compensation parameter of the distance sensor as $n = 0.8458$;
a second sensor-compensation-parameter acquiring sub-module configured to, when the operation time period is greater than or equal to 200 hours and less than 300 hours, determine the compensation parameter of the distance sensor as $n = 1.8458$; and
a third sensor-compensation-parameter acquiring sub-module configured to, when the operation time period is greater than or equal to 300 hours, determine the compensation parameter of the distance sensor as $n = 2.8458$.

In an embodiment, the constant $m = 0.0009754$.

According to a third aspect of the embodiments of the present disclosure, there is provided an apparatus for compensating an operating parameter of a display circuit, including:

a processor; and
a memory for storing instructions executable by the processor,
wherein the processor is configured to:

acquire an operating parameter of a target display circuit on the display screen, the target display circuit being disposed at a position corresponding to a position of the distance sensor;
acquire an operation time period of the distance sensor;
acquire a compensation parameter of the distance sensor according to the operation time period, the compensation parameter of the distance sensor being positively correlated to the operation time period; and
compensate the operating parameter of the target display circuit according to the compensation parameter of the distance sensor to acquire a compensated operating parameter of the target display circuit.

According to a fourth aspect of the embodiments of the present disclosure, there is provided a non-transitory computer readable storage medium having stored thereon a computer instructions, wherein the instructions are executed by a processor, the processor is caused to perform the steps of any method according to the first aspect.

**BRIEF DESCRIPTION OF THE DRAWINGS**

The accompanying drawings, which are incorporated in and constitute a part of this specification, illustrate embodiments consistent with the disclosure and, together with the description, serve to explain the principles of the disclosure.

Fig. 1 is a diagram of an application scenario of a method for compensating an operating parameter of a display circuit on according to an exemplary embodiment;

Fig. 2a is a flow chart of a method for compensating an operating parameter of a display circuit according to an exemplary embodiment no longer covered by the claims;

Fig. 2b is a flow chart of a display circuit operating parameter compensation method according to an exemplary embodiment no longer covered by the claims;

Fig. 3a is a block diagram of an apparatus for compensating an operating parameter of a display circuit according to an exemplary embodiment;

Fig. 3b is a block diagram of an apparatus for compensating an operating parameter of a display circuit according to an exemplary embodiment;

Fig. 3c is a block diagram of an apparatus for compensating an operating parameter of a display circuit according to an exemplary embodiment;

Fig. 3d is a block diagram of an apparatus for compensating an operating parameter of a display circuit according to an exemplary embodiment;

Fig.4 is a block diagram of an apparatus according to an exemplary embodiment; and

Fig. 5 is a block diagram of an apparatus according to an exemplary embodiment.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

With the rapid development of science and technology and the continuous improvement of people's living standards, in recent years, the full-screen has gradually become the trend of the front surface design of a mobile terminal. When designing full-screen mobile terminal, a distance sensor P-sensor, which is usually provided on the front surface of the mobile terminal, has been a challenge to manufacturers for improving the screen ratio in the front surface.

In the related art, the P-sensor may be disposed under the display screen, and the P-sensor may transmit an infrared light signal through the display screen and receive an infrared light signal reflected from the outside to obtain the distance between an external object and the terminal.

Since the infrared light signal emitted by the P-sensor is usually infrared light having a wavelength of less than or equal to 1000 nm. The transistor used in an AMOLED screen is sensitive to the infrared light with wavelength in this range. Under the interference of the infrared light in this range, the organic light-emitting material of the transistor corresponding to the P-sensor on the display may be damaged, resulting in reduced brightness of the area on the display corresponding to the P-sensor, thereby reducing the display effect and reducing the user experience.

In order to solve the above problem, in the technical solution provided by the embodiment of the present disclosure, an operating parameter of a target display circuit at a position on a display screen corresponding to the position of the distance sensor is acquired. The target display circuit may be understood as a display circuit that may be influenced or damaged on the display screen when the distance sensor performs distance measurement. An operation time period of the distance sensor is acquired, and a compensation parameter of the distance sensor is acquired according to the operation time period. The compensation parameter of the distance sensor is positively correlated to the operation time period, therefore, the compensation parameter of the distance sensor can reflect the influence or damage caused to the target display circuit during the distance measurement performed by the distance sensor. The operating parameter of the target display circuit is compensated according to the compensation parameter of the distance sensor to acquire a compensated operating parameter of the target display circuit. Then, when the electronic device controls the target display circuit to display according to the compensated operating parameter, the influence or damage caused to the target display circuit by the distance sensor can be compensated, such that the display effect will not reflect the influence or damage caused to the target display circuit by the distance sensor, thereby improving the user experience.

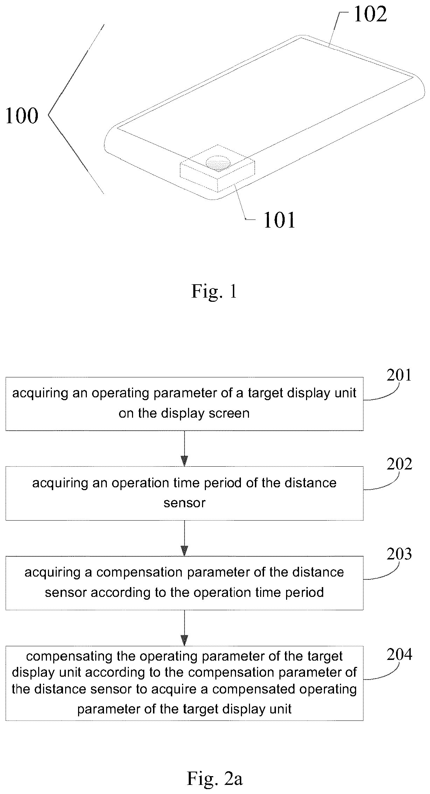

The technical solution provided by an embodiment of the present disclosure relates to an electronic device 100 shown in Fig. 1. The electronic device 100 includes a distance sensor P-sensor 101 and a display screen 102, and the distance sensor 101 is disposed under the display screen 102. The electronic device 100 may be a mobile phone, a tablet computer, a smart wearable device, etc., which is not limited in this embodiment of the present disclosure. The display screen 102 may be a liquid crystal display (LCD), an organic light emitting diode (OLED) display, or an active-matrix organic light-emitting diode (AMOLED) display screen, etc.

An embodiment of the present disclosure provides a method for compensating an operating parameter of a display circuit, which is applied to an electronic device shown in Fig. 1. As shown in Fig. 2a, the method includes the following steps 201 to 203.

In step 201, an operating parameter of a target display circuit on a display screen is acquired.

The target display circuit is a display circuit disposed at a position corresponding to a position of a distance sensor.

For example, the target display circuit may include one or more display circuits, each of which may include one or more pixels.

The position of the target display circuit corresponds to the position of the distance sensor, and it can be understood that the target display circuit is located directly above of in a peripheral area directly above the distance sensor. For example, the target display circuit may be located on the display screen in an area centered on the axis center of the sensor, which may be a circular area with a radius of 5 mm centered on the axis center of the distance sensor. When the distance sensor emits an infrared light, the target display circuit is exposed to the infrared light. When the target display circuit is exposed to the irradiation for a long time, damage may occur, causing the target display circuit to have a reduced brightness in displaying an image.

The operating parameter of the target display circuit includes an operating voltage of the target display circuit, and may include a brightness value of the target display circuit, a gamma value of the target display circuit, and an operating voltage at the maximum brightness value of the target display circuit. It should be noted that the brightness value of the target display circuit, the gamma value of the target display circuit, and the operating voltage at the maximum brightness value of the target display circuit can also be understood as the brightness value of the display screen where the target display circuit is located, the gamma value of the target display circuit where the target display circuit is located, and the operating voltage at the maximum brightness value of the target display circuit where the target display circuit is located.

In step 202, an operation time period of the distance sensor is acquired.

For example, the operation time period of the distance sensor is acquired in the following manner. The number of turned-on times of the distance sensor is accumulated each time the distance sensor is turned on, and the operation time period of the distance sensor is acquired according to the accumulated number of turned-on times and a preset value of a turned-on time period of the distance sensor.

In step 203, a compensation parameter of the distance sensor is acquired according to the operation time period.

The compensation parameter of the distance sensor is positively correlated to the operation time period.

The compensation parameter of the distance sensor is acquired according to the operation time period in the following manner. A query is performed in a compensation parameter database according to the operation time period, and the compensation parameter of the distance sensor is determined according to the query result. The compensation parameter database indicates a correspondence relationship between compensation parameters and operation time periods.

In step 204, the operating parameter of the target display circuit is compensated according to the compensation parameter of the distance sensor to acquire a compensated operating parameter of the target display circuit.

The operating parameter of the target display circuit is compensated according to the compensation parameter of the distance sensor to acquire the compensated operating parameter of the target display circuit in the following manner. The compensation parameter of the distance sensor and the operating parameter of the target display circuit are substituted into a preset compensation algorithm of the distance sensor for calculation, and the compensated operating parameter of the target display circuit is acquired according to the calculation result. Alternatively, a query is performed in a sensor compensation database according to the compensation parameter of the distance sensor and the operating parameter of the target display circuit, and the compensated operating parameter of the target display circuit is acquired according to the query result. The sensor compensation database indicates a correspondence relationship among compensation parameters of the distance sensor, operating parameters of the target display circuit and compensated operating parameters of the target display circuit.

The compensated operating parameter is used to control the target display circuit to display according to the compensated operating parameter.

For example, the operating parameter of the target display circuit includes an operating voltage $V_{data}$ of the target display circuit, a brightness value $Br$ of the target display circuit, a gamma value $\gamma$ of the target display circuit, and an operating voltage $V_{max}$ at the maximum brightness value of the target display circuit.

A compensation parameter of the distance sensor may be acquired according to the operation time period in the following manner. When the operation time period is greater than or equal to 100 hours and less than 200 hours, the compensation parameter of the distance sensor is determined as $n = 0.8458$; when the operation time period is greater than or equal to 200 hours and less than 300 hours, the compensation parameter of the distance sensor is determined as $n = 1.8458$; and when the operation time period is greater than or equal to 300 hours, the compensation parameter of the distance sensor is determined as $n = 2.8458$.

The operating parameter of the target display circuit may be compensated according to the compensation parameter of the distance sensor to acquire the compensated operating parameter of the target display circuit in the following manner. The compensated operating voltage $V_c$ of the target display circuit is acquired according to

$$V_c = V_{data} + \left(\frac{(Br*m+n)}{65025}\right)^{\gamma} * (\frac{Br}{255}) * V_{max} * V_{data}$$

, where $m$ is a constant, and $n$ is the compensation parameter of the distance sensor. The constant may be $m = 0.0009754$.

In the technical solution provided by the embodiment of the present disclosure, an operating parameter of a target display circuit at a position on a display screen corresponding to the position of the distance sensor is acquired. The target display circuit may be understood as a display circuit that may be influenced or damaged on the display screen when the distance sensor performs distance measurement. An operation time period of the distance sensor is acquired, and a compensation parameter of the distance sensor is acquired according to the operation time period. The compensation parameter of the distance sensor is positively correlated to the operation time period, therefore, the compensation parameter of the distance sensor can reflect the influence or damage caused to the target display circuit during the distance measurement performed by the distance sensor. The operating parameter of the target display circuit is compensated according to the compensation parameter of the distance sensor to acquire a compensated operating parameter of the target display circuit. Then, when the electronic device controls the target display circuit to display according to the compensated operating parameter, the influence or damage caused to the target display circuit by the distance sensor can be compensated, such that the display effect will not reflect the influence or damage caused to the target display circuit by the distance sensor, thereby improving the user experience.

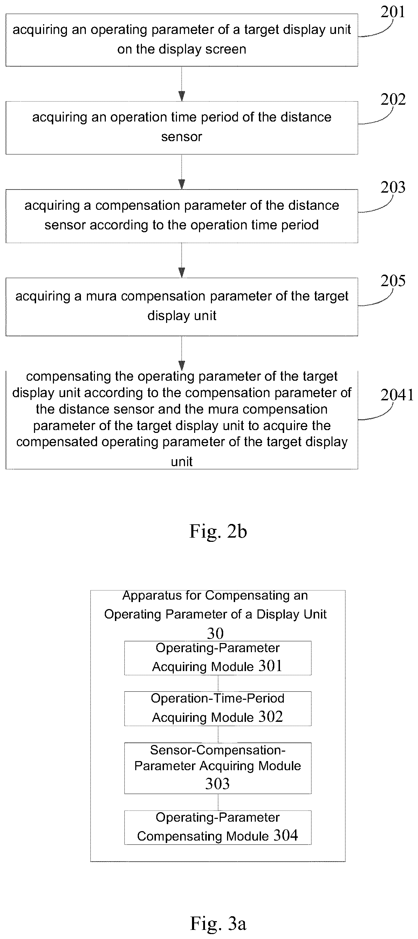

In one embodiment, as shown in Fig. 2b, the method for compensating an operating parameter of a display circuit provided by the embodiment of the present disclosure further includes the following step 205.

In step 205, a mura compensation parameter of the target display circuit is acquired.

For example, the mura compensation parameter of the target display circuit may be acquired in the following manner. A query may be performed in a mura compensation parameter database according to a position parameter of the target display circuit, and the mura compensation parameter of the target display circuit may be acquired according to the query result. The mura compensation parameter database indicates a correspondence relationship between position parameters of the target display circuit and mura compensation parameters.

In step 204, the operating parameter of the target display circuit is compensated according to the compensation parameter of the distance sensor to acquire a compensated operating parameter of the target display circuit. This step may be implemented by step 2041.

In step 2041, the operating parameter of the target display circuit is compensated according to the compensation parameter of the distance sensor and the mura compensation parameter of the target display circuit to acquire the compensated operating parameter of the target display circuit.

The operating parameter of the target display circuit may be compensated according to the compensation parameter of the distance sensor and the mura compensation parameter of the target display circuit to acquire the compensated operating parameter of the target display circuit in the following manner. The compensation parameter of the distance sensor and the operating parameter of the target display circuit are substituted into a preset compensation algorithm of the distance sensor for calculation, and the compensated operating parameter of the target display circuit may be acquired according to the calculation result. Alternatively, a query may be performed in a sensor compensation database according to the compensation parameter of the distance sensor and the operating parameter of the target display circuit, and the compensated operating parameter of the target display circuit may be acquired according to the query result. The sensor compensation database indicates a correspondence relationship among compensation parameters of the distance sensor, operating parameters of the target display circuit and compensated operating parameters of the target display circuit.

For example, the operating parameter of the target display circuit may be compensated according to the compensation parameter of the distance sensor and the mura compensation parameter of the target display circuit to acquire the compensated operating parameter of the target display circuit in the following manner. The compensated operating voltage $V_c$ of the target display circuit may be acquired according to

$$V_c = V_{data} + \left(\frac{(Br*m+n)}{65025}\right)^{\gamma} * (\frac{Br}{255}) * V_{max} * (V_{data} + V_{mura})$$

.

The following is an apparatus embodiment of the present disclosure, which may be used to implement the method embodiments of the present disclosure.

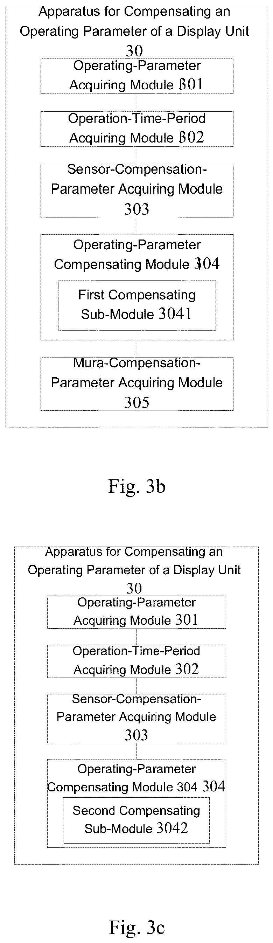

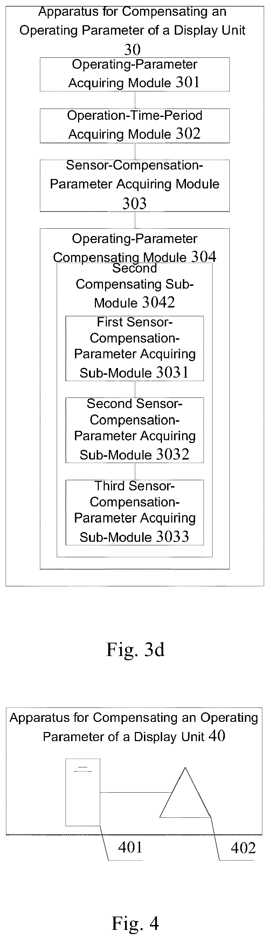

Fig. 3a is a block diagram of an apparatus 30 for compensating an operating parameter of a display circuit according to an exemplary embodiment. The apparatus 30 for compensating an operating parameter of a display circuit may be a terminal or a part of a terminal, and the apparatus 30 for compensating an operating parameter of a display

7

circuit may be implemented as part or all of the electronic device by software, hardware or a combination of both. As shown in Fig. 3, the apparatus 30 for compensating an operating parameter of a display circuit includes:

an operating-parameter acquiring module 301 configured to acquire an operating parameter of a target display circuit on the display screen, the target display circuit being disposed at a position corresponding to a position of the distance sensor;

an operation-time-period acquiring module 302 configured to acquire an operation time period of the distance sensor;

a sensor-compensation-parameter acquiring module 303 configured to acquire a compensation parameter of the distance sensor according to the operation time period, the compensation parameter of the distance sensor being positively correlated to the operation time period; and

an operating-parameter compensating module 304 configured to compensate the operating parameter of the target display circuit according to the compensation parameter of the distance sensor to acquire a compensated operating parameter of the target display circuit.

In an embodiment, as shown in Fig. 3b, apparatus 30 for compensating an operating parameter of a display circuit further includes:

a mura-compensation-parameter acquiring module 305 configured to acquire a mura compensation parameter of the target display circuit;

the operating-parameter compensating module 304 includes:

a first compensating sub-module 3041 configured to compensate the operating parameter of the target display circuit according to the compensation parameter of the distance sensor and the mura compensation parameter of the target display circuit to acquire the compensated operating parameter of the target display circuit.

In an embodiment, the operating parameter of the target display circuit includes an operating voltage $V_{data}$ of the target display circuit, a brightness value $Br$ of the target display circuit, a gamma value $\gamma$ of the target display circuit, and an operating voltage $V_{max}$ at the maximum brightness value of the target display circuit; and as shown in Fig. 3c, the operating-parameter compensating module 304 includes:

a second compensating sub-module 3042 configured to acquire a compensated operating voltage $V_c$ of the target display circuit according to $$V_c = V_{data} + \left(\frac{(Br*m+n)}{65025}\right)^{\gamma} * (\frac{Br}{255}) * V_{max} * V_{data}$$ , where $m$ is a constant, and $n$ is the compensation parameter of the distance sensor.

In an embodiment, as shown in Fig. 3d, the sensor-compensation-parameter acquiring module 303 includes:

a first sensor-compensation-parameter acquiring sub-module 3031 configured to, when the operation time period is greater than or equal to 100 hours and less than 200 hours, determine the compensation parameter of the distance sensor as $n = 0.8458$;

a second sensor-compensation-parameter acquiring sub-module 3032 configured to, when the operation time period is greater than or equal to 200 hours and less than 300 hours, determine the compensation parameter of the distance sensor as $n = 1.8458$; and

a third sensor-compensation-parameter acquiring sub-module 3033 configured to, when the operation time period is greater than or equal to 300 hours, determine the compensation parameter of the distance sensor as $n = 2.8458$.

In an embodiment, the constant $m = 0.0009754$.

In the apparatus for compensating an operating parameter of a display circuit provided by the embodiment of the present disclosure, an operating parameter of a target display circuit at a position on a display screen corresponding to the position of the distance sensor is acquired. The target display circuit may be understood as a display circuit that may be influenced or damaged on the display screen when the distance sensor performs distance measurement. An operation time period of the distance sensor is acquired, and a compensation parameter of the distance sensor is acquired according to the operation time period. The compensation parameter of the distance sensor is positively correlated to the operation time period, therefore, the compensation parameter of the distance sensor can reflect the influence or damage caused to the target display circuit during the distance measurement performed by the distance sensor. The operating parameter of the target display circuit is compensated according to the compensation parameter of the distance sensor to acquire a compensated operating parameter of the target display circuit. Then, when the electronic device controls the target display circuit to display according to the compensated operating parameter, the influence or damage caused to the target display circuit by the distance sensor can be compensated, such that the display effect will not reflect the influence or damage caused to the target display circuit by the distance sensor, thereby improving the user experience.

Fig.4 is a block diagram of an apparatus 40 for compensating an operating parameter of a display circuit according to an exemplary embodiment. The apparatus 40 for compensating an operating parameter of a display circuit may be a terminal or a part of a terminal. The apparatus 40 for compensating an operating parameter of a display circuit includes:

a processor 401; and
a memory 402 for storing instructions executable by the processor 401,
wherein the processor 401 is configured to:

acquire an operating parameter of a target display circuit on the display screen, the target display circuit being disposed at a position corresponding to a position of the distance sensor;
acquire an operation time period of the distance sensor;
acquire a compensation parameter of the distance sensor according to the operation time period, the compensation parameter of the distance sensor being positively correlated to the operation time period; and
compensate the operating parameter of the target display circuit according to the compensation parameter of the distance sensor to acquire a compensated operating parameter of the target display circuit.

In an embodiment, the processor 401 may be further configured to:

acquire a mura compensation parameter of the target display circuit;
compensating the operating parameter of the target display circuit according to the compensation parameter of the distance sensor to acquire a compensated operating parameter of the target display circuit includes:
compensating the operating parameter of the target display circuit according to the compensation parameter of the distance sensor and the mura compensation parameter of the target display circuit to acquire the compensated operating parameter of the target display circuit.

In an embodiment, the processor 401 may be further configured to: the operating parameter of the target display circuit includes an operating voltage $V_{data}$ of the target display circuit, a brightness value $Br$ of the target display circuit, a gamma value $\gamma$ of the target display circuit, and an operating voltage $V_{max}$ at the maximum brightness value of the target display circuit; and
compensating the operating parameter of the target display circuit according to the compensation parameter of the distance sensor to acquire a compensated operating parameter of the target display circuit includes:
acquiring a compensated operating voltage $V_c$ of the target display circuit according to

$$V_c = V_{data} + \left(\frac{(Br^*m+n)}{65025}\right)^{\gamma} * \left(\frac{Br}{255}\right) * V_{max} * V_{data}$$

, where $m$ is a constant, and $n$ is the compensation parameter of the distance sensor.

In an embodiment, the processor 401 may be further configured to: acquiring a compensation parameter of the distance sensor according to the operation time period includes:

when the operation time period is greater than or equal to 100 hours and less than 200 hours, determining the compensation parameter of the distance sensor as $n = 0.8458$;
when the operation time period is greater than or equal to 200 hours and less than 300 hours, determining the compensation parameter of the distance sensor as $n = 1.8458$; and
when the operation time period is greater than or equal to 300 hours, determining the compensation parameter of the distance sensor as $n = 2.8458$.

In an embodiment, the processor 401 may be further configured to: the constant $m = 0.0009754$.
In the apparatus for compensating an operating parameter of a display circuit provided by the embodiment of the present disclosure, an operating parameter of a target display circuit at a position on a display screen corresponding to the position of the distance sensor is acquired. The target display circuit may be understood as a display circuit that may be influenced or damaged on the display screen when the distance sensor performs distance measurement. An operation time period of the distance sensor is acquired, and a compensation parameter of the distance sensor is acquired according to the operation time period. The compensation parameter of the distance sensor is positively correlated to the operation time period, therefore, the compensation parameter of the distance sensor can reflect the influence or damage caused to the target display circuit during the distance measurement performed by the distance sensor. The operating parameter of the target display circuit is compensated according to the compensation parameter of the distance sensor to acquire a compensated operating parameter of the target display circuit. Then, when the electronic device controls the target display circuit to display according to the compensated operating parameter, the influence or damage caused to the target display circuit by the distance sensor can be compensated, such that the display effect will not reflect the influence or damage caused to the target display circuit by the distance sensor, thereby improving the user experience.

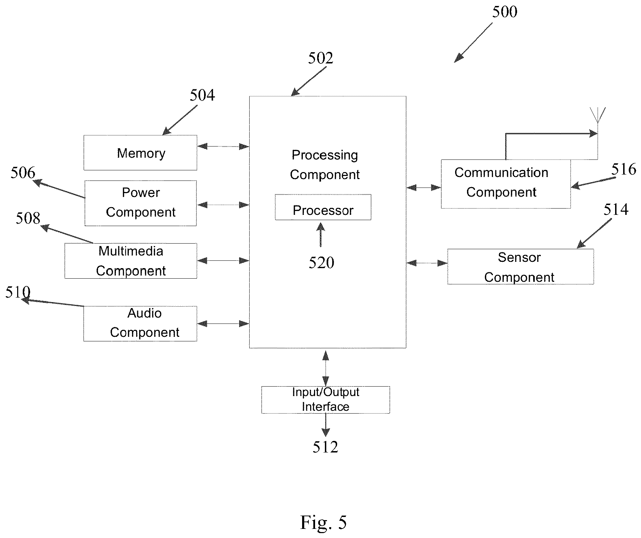

Fig. 5 is a block diagram of an apparatus 500 for compensating an operating parameter of a display circuit according to an exemplary embodiment. For example, the apparatus 500 may be a mobile phone, a computer, a digital broadcast terminal, a messaging device, a gaming console, a tablet, a medical device, exercise equipment, a personal digital assistant, and the like.

The apparatus 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the apparatus 500, such as the operations associated with display, telephone calls, data communications, camera operations, and recording operations. The processing component 502 may include one or more processors 520 to execute instructions, to perform all or part of the steps of the above method. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the apparatus 500. Examples of such data include instructions for any applications or methods operated on the apparatus 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the apparatus 500. The power component 506 may include a power management system, one or more power sources, and any other components associated with the generation, management, and distribution of power in the apparatus 500.

The multimedia component 508 includes a screen providing an output interface between the apparatus 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the apparatus 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the apparatus 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the apparatus 500. For instance, the sensor component 514 may detect an open/closed status of the apparatus 500, relative positioning of components, e.g., the display and the keypad, of the apparatus 500, a change in position of the apparatus 500 or a component of the apparatus 500, a presence or absence of user contact with the apparatus 500, an orientation or an acceleration/deceleration of the apparatus 500, and a change in temperature of the apparatus 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the apparatus 500 and other devices. The apparatus 500 can access a wireless network based on a communication standard, such as WiFi, 2G, 3G, 4G or 5G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, to perform the above method.

In exemplary embodiments, there is also provided a non-transitory computer-readable storage medium including instructions, such as included in the memory 504, executable by the processor 520 in the apparatus 500 to perform the above method for compensating an operating parameter of a display circuit. For example, the non-transitory computer-readable storage medium may be a ROM, a RAM, a CD-ROM, a magnetic tape, a floppy disc, an optical data storage device, and the like.

A non-transitory computer readable storage medium, when instructions (or computer program) in the storage medium are executed by the processor of the apparatus 500, causes the apparatus 500 to perform the above method for compensating an operating parameter of a display circuit. The method includes:

acquiring an operating parameter of a target display circuit on the display screen, the target display circuit being disposed at a position corresponding to a position of the distance sensor;
acquiring an operation time period of the distance sensor;
acquiring a compensation parameter of the distance sensor according to the operation time period, the compensation parameter of the distance sensor being positively correlated to the operation time period; and
compensating the operating parameter of the target display circuit according to the compensation parameter of the distance sensor to acquire a compensated operating parameter of the target display circuit.

In an embodiment, the method further includes:

acquiring a mura compensation parameter of the target display circuit;
compensating the operating parameter of the target display circuit according to the compensation parameter of the distance sensor to acquire a compensated operating parameter of the target display circuit includes:
compensating the operating parameter of the target display circuit according to the compensation parameter of the distance sensor and the mura compensation parameter of the target display circuit to acquire the compensated operating parameter of the target display circuit.

In an embodiment, the operating parameter of the target display circuit includes an operating voltage $V_{data}$ of the target display circuit, a brightness value $Br$ of the target display circuit, a gamma value $\gamma$ of the target display circuit, and an operating voltage $V_{max}$ at the maximum brightness value of the target display circuit; and

compensating the operating parameter of the target display circuit according to the compensation parameter of the distance sensor to acquire a compensated operating parameter of the target display circuit includes:
acquiring a compensated operating voltage $V_c$ of the target display circuit according to

$$V_c = V_{data} + \left( \frac{(Br*m+n)}{65025} \right)^{\gamma} * \left( \frac{Br}{255} \right) * V_{max} * V_{data}$$

, where $m$ is a constant, and $n$ is the compensation parameter of the distance sensor.

In an embodiment, acquiring a compensation parameter of the distance sensor according to the operation time period includes:

when the operation time period is greater than or equal to 100 hours and less than 200 hours, determining the compensation parameter of the distance sensor as $n = 0.8458$;
when the operation time period is greater than or equal to 200 hours and less than 300 hours, determining the compensation parameter of the distance sensor as $n = 1.8458$; and

when the operation time period is greater than or equal to 300 hours, determining the compensation parameter of the distance sensor as $n$ = 2.8458.

In an embodiment, the constant $m$ = 0.0009754.

Other embodiments of the disclosure will be apparent to those skilled in the art from consideration of the specification and practice of the disclosure disclosed here.

**Claims**

1. A method for compensating an operating parameter of a display circuit, the method is implemented by an electronic device comprising a display screen and a distance sensor disposed under the display screen, **characterized in that** the method comprises:

   acquiring (201) an operating parameter of a target display circuit on the display screen, the operating parameter being an operating voltage of the target display circuit,
   acquiring (202) an operation time period of the distance sensor, wherein the number of turned-on times of the distance sensor is accumulated each time the distance sensor is turned on, and the operation time period of the distance sensor is acquired according to the accumulated number of turned-on times and a preset value of a turned-on time period of the distance sensor;
   acquiring (203) a compensation parameter of the distance sensor according to the operation time period, the compensation parameter of the distance sensor being positively correlated to the operation time period, whereby a query is performed in a compensation parameter database according to the operation time period, and the compensation parameter of the distance sensor is determined according to the query result, whereby the compensation parameter database indicates a correspondence relationship between compensation parameters and operation time periods; and
   compensating (204) the operating parameter of the target display circuit according to the compensation parameter of the distance sensor to acquire a compensated operating parameter of the target display circuit, whereby the compensation parameter of the distance sensor and the operating parameter of the target display circuit are substituted into a preset compensation algorithm of the distance sensor for calculation, and the compensated operating parameter of the target display circuit is acquired according to the calculation result, or a query is performed in a sensor compensation database according to the compensation parameter of the distance sensor and
   the operating parameter of the target display circuit, and the compensated operating parameter of the target display circuit is acquired according to the query result, whereby the sensor compensation database indicates a correspondence relationship among compensation parameters of the distance sensor, operating parameters of the target display circuit and compensated operating parameters of the target display circuit.

2. The method for compensating an operating parameter of a display circuit according to claim 1, further comprising:

   acquiring (205) a mura compensation parameter of the target display circuit;
   wherein compensating (204) the operating parameter of the target display circuit according to the compensation parameter of the distance sensor to acquire a compensated operating parameter of the target display circuit comprises:
   compensating (2041) the operating parameter of the target display circuit according to the compensation parameter of the distance sensor and the mura compensation parameter of the target display circuit to acquire the compensated operating parameter of the target display circuit.

3. The method for compensating an operating parameter of a display circuit according to claim 1, wherein

   the operating parameter of the target display circuit comprises an operating voltage $V_{data}$ of the target display circuit, a brightness value $Br$ of the target display circuit, a gamma value $\gamma$ of the target display circuit, and an operating voltage $V_{max}$ at the maximum brightness value of the target display circuit; and

   compensating (204) the operating parameter of the target display circuit according to the compensation parameter of the distance sensor to acquire a compensated operating parameter of the target display circuit comprises:

acquiring a compensated operating voltage $V_c$ of the target display circuit according to

$$V_c = V_{data} + \left(\frac{(Br*m+n)}{65025}\right)^{\gamma} * (\frac{Br}{255}) * V_{max} * V_{data}$$

, where $m$ is a constant, and $n$ is the compensation parameter of the distance sensor.

4. The method for compensating an operating parameter of a display circuit according to claim 3, wherein acquiring (203) a compensation parameter of the distance sensor according to the operation time period comprises:

when the operation time period is greater than or equal to 100 hours and less than 200 hours, determining the compensation parameter of the distance sensor as $n = 0.8458$;
when the operation time period is greater than or equal to 200 hours and less than 300 hours, determining the compensation parameter of the distance sensor as $n = 1.8458$; and
when the operation time period is greater than or equal to 300 hours, determining the compensation parameter of the distance sensor as $n = 2.8458$.

5. The method for compensating an operating parameter of a display circuit according to claim 3, wherein the constant $m = 0.0009754$ .

6. An apparatus for compensating an operating parameter of a display circuit, which is applied to an electronic device comprising a display screen and a distance sensor disposed under the display screen, a target display circuit being disposed at a position corresponding to a position of the distance sensor, namely directly above or in a peripheral area directly above the distance sensor, **characterized in that** the apparatus is configured to perform any of claims 1 - 5.

7. A non-transitory computer readable storage medium having stored thereon a computer instructions, wherein the instructions are executed by a processor, the processor is caused to perform the method according to any one of claims 1 to 5.

8. A computer executable program, when being executed by a processor, the processor is caused to perform the method according to any one of claims 1 to 5.


**Patentansprüche**

1. Verfahren zum Kompensieren eines Betriebsparameters einer Anzeigeschaltung, wobei das Verfahren durch eine elektronische Vorrichtung implementiert wird, welche einen Anzeigebildschirm und einen unter dem Anzeigebildschirm angeordneten Abstandssensor aufweist, **dadurch gekennzeichnet, dass** das Verfahren die folgenden Schritte aufweist:

Erfassen (201) eines Betriebsparameters einer Ziel-Anzeigeschaltung auf dem Anzeigebildschirm, wobei der Betriebsparameter eine Betriebsspannung der Ziel-Anzeigeschaltung ist,
Erfassen (202) eines Betriebszeitraums des Abstandssensors, wobei die Anzahl der Einschaltzeiten des Abstandssensors bei jedem Einschalten des Abstandssensors akkumuliert wird, und der Betriebszeitraum des Abstandssensors gemäß der akkumulierten Anzahl der Einschaltzeiten und einem voreingestellten Wert eines Einschaltzeitraums des Abstandssensors erfasst wird;
Erfassen (203) eines Kompensationsparameters des Abstandssensors gemäß dem Betriebszeitraum, wobei der Kompensationsparameter des Abstandssensors positiv mit dem Betriebszeitraum korreliert ist, wobei eine Abfrage in einer Kompensationsparameterdatenbank gemäß dem Betriebszeitraum durchgeführt wird, und der Kompensationsparameter des Abstandssensors gemäß dem Abfrageergebnis bestimmt wird, wobei die Kompensationsparameterdatenbank eine Korrespondenzbeziehung zwischen Kompensationsparametern und Betriebszeiträumen angibt; und
Kompensieren (204) des Betriebsparameters der Ziel-Anzeigeschaltung gemäß dem Kompensationsparameter des Abstandssensors, um einen kompensierten Betriebsparameter der Ziel-Anzeigeschaltung zu erfassen, wobei der Kompensationsparameter des Abstandssensors und der Betriebsparameter der Ziel-Anzeigeschaltung in einen vorgegebenen Kompensationsalgorithmus des Abstandssensors zur Berechnung eingesetzt werden, und der kompensierte Betriebsparameter der Ziel-Anzeigeschaltung gemäß dem Berechnungsergebnis erfasst wird, oder eine Abfrage in einer Sensorkompensationsdatenbank gemäß dem Kompensationsparameter des Abstandssensors und dem Betriebsparameter der Ziel-Anzeigeschaltung durchgeführt wird, und der kompensierte Betriebsparameter der Ziel-Anzeigeschaltung gemäß dem Abfrageergebnis erfasst wird, wobei die Sensorkompensationsdatenbank eine Korrespondenzbeziehung zwischen Kompensationsparametern des Abstandssensors, Betriebsparametern der Ziel-Anzeigeschaltung und kompensierten Betriebsparametern der Ziel-Anzeigeschaltung angibt.

2. Verfahren zum Kompensieren eines Betriebsparameters einer Anzeigeschaltung nach Anspruch 1, ferner mit dem folgenden Schritt:

Erfassen (205) eines Mura-Kompensationsparameters der Ziel-Anzeigeschaltung;
wobei das Kompensieren (204) des Betriebsparameters der Ziel-Anzeigeschaltung gemäß dem Kompensationsparameter des Abstandssensors, um einen kompensierten Betriebsparameter der Ziel-Anzeigeschaltung zu erfassen, den folgenden Schritt aufweist:
Kompensieren (2041) des Betriebsparameters der Ziel-Anzeigeschaltung gemäß dem Kompensationsparameter des Abstandssensors und dem Mura-Kompensationsparameter der Ziel-Anzeigeschaltung, um den kompensierten Betriebsparameter der Ziel-Anzeigeschaltung zu erfassen.

3. Verfahren zum Kompensieren eines Betriebsparameters einer Anzeigeschaltung nach Anspruch 1, bei welchem

der Betriebsparameter der Ziel-Anzeigeschaltung eine Betriebsspannung $V_{data}$ der Ziel-Anzeigeschaltung aufweist, einen Helligkeitswert Br der Ziel-Anzeigeschaltung, einen Gamma-Wert $\gamma$ der Ziel-Anzeigeschaltungen, und eine Betriebsspannung $V_{max}$ bei dem maximalen Helligkeitswert der Ziel-Anzeigeschaltung aufweist; und
wobei das Kompensieren (204) des Betriebsparameters der Ziel-Anzeigeschaltung gemäß dem Kompensationsparameter des Abstandssensors, um einen kompensierten Betriebsparameter der Ziel-Anzeigeschaltung zu erfassen, den folgenden Schritt aufweist:
Erfassen einer kompensierten Betriebsspannung $V_c$ der Ziel-Anzeigeschaltung gemäß

$$V_c = V_{data} + \left(\frac{(Br*m+n)}{65025}\right)^\gamma * \left(\frac{Br}{255}\right) * V_{max} * V_{data} \, ,$$

wobei m eine Konstante ist, und n der Kompensationsparameter des Abstandssensors ist.

4. Verfahren zum Kompensieren eines Betriebsparameters einer Anzeigeschaltung nach Anspruch 3, bei welchem das Erfassen (203) eines Kompensationsparameters des Abstandssensors gemäß dem Betriebszeitraum die folgenden Schritte aufweist:

wenn der Betriebszeitraum länger als oder gleich 100 Stunden ist und kürzer als 200 Stunden ist, Bestimmen des Kompensationsparameters des Abstandssensors als n = 0,8458;
wenn der Betriebszeitraum länger als oder gleich 200 Stunden ist und kürzer als 300 Stunden ist, Bestimmen des Kompensationsparameters des Abstandssensors als n = 1,8458; und
der Betriebszeitraum länger als oder gleich 300 Stunden ist, Bestimmen des Kompensationsparameters des Abstandssensors als n = 2,8458.

5. Verfahren zum Kompensieren eines Betriebsparameters einer Anzeigeschaltung nach Anspruch 3, bei welchem die Konstante m = 0,0009754 ist.

6. Vorrichtung zum Kompensieren eines Betriebsparameters einer Anzeigeschaltung, welche bei einer elektronischen Vorrichtung Anwendung findet, welche einen Anzeigebildschirm und einen unter dem Anzeigebildschirm angeordneten Abstandssensor aufweist, wobei eine Ziel-Anzeigeschaltung an einer Position angeordnet ist, die einer Position des Abstandssensors entspricht, nämlich direkt über oder in einem Peripheriebereich direkt über dem Abstandssensor, **dadurch gekennzeichnet, dass** die Vorrichtung dazu ausgebildet ist, einen der Ansprüche 1-5 auszuführen.

7. Nichtflüchtiges computerlesbares Speichermedium, auf welchem Computerbefehle gespeichert sind, wobei, wenn die Befehle von einem Prozessor ausgeführt werden, der Prozessor zur Durchführung des Verfahrens nach einem der Ansprüche 1 bis 5 veranlasst wird.

8. Computerausführbares Programm, welches bei Ausführung durch einen Prozessor, des Prozessor veranlasst, das Verfahren nach einem der Ansprüche 1 bis 5 auszuführen.

**Revendications**

1. Procédé de compensation d'un paramètre de fonctionnement d'un circuit d'affichage, le procédé est mis en oeuvre par un dispositif électronique comprenant un écran d'affichage et un capteur de distance disposé au-dessous de l'écran d'affichage, **caractérisé en ce que** le procédé comprend :

   l'acquisition (201) d'un paramètre de fonctionnement d'un circuit d'affichage cible sur l'écran d'affichage, le paramètre de fonctionnement étant une tension de fonctionnement du circuit d'affichage cible, l'acquisition (202) d'une période de fonctionnement du capteur de distance, dans lequel le nombre de moments de mise en marche du capteur de distance est cumulé à chaque fois que le capteur de distance est mis en marche, et la période de fonctionnement du capteur de distance est acquise en fonction du nombre cumulé de moments de mise en marche et d'une valeur prédéfinie d'une période de mise en marche du capteur de distance ; l'acquisition (203) d'un paramètre de compensation du capteur de distance en fonction de la période de fonctionnement, le paramètre de compensation du capteur de distance étant corrélé positivement à la période de fonctionnement, moyennant quoi une requête est effectuée dans une base de données de paramètres de compensation en fonction de la période de fonctionnement, et le paramètre de compensation du capteur de distance est déterminé en fonction du résultat de la requête, moyennant quoi la base de données de paramètres de compensation indique une relation de correspondance entre les paramètres de compensation et les périodes de fonctionnement ; et la compensation (204) du paramètre de fonctionnement du circuit d'affichage cible en fonction du paramètre de compensation du capteur de distance pour acquérir un paramètre de fonctionnement compensé du circuit d'affichage cible, moyennant quoi le paramètre de compensation du capteur de distance et le paramètre de fonctionnement du circuit d'affichage cible sont substitués dans un algorithme de compensation prédéfini du capteur de distance pour un calcul, et le paramètre de fonctionnement compensé du circuit d'affichage cible est acquis en fonction du résultat du calcul, ou une requête est effectuée dans une base de données de compensation de capteur en fonction du paramètre de compensation du capteur de distance et du paramètre de fonctionnement du circuit d'affichage cible, et le paramètre de fonctionnement compensé du circuit d'affichage cible est acquis en fonction du résultat de la requête, moyennant quoi la base de données de compensation de capteur indique une relation de correspondance parmi les paramètres de compensation du capteur de distance, les paramètres de fonctionnement du circuit d'affichage cible et les paramètres de fonctionnement compensés du circuit d'affichage cible.

2. Procédé de compensation d'un paramètre de fonctionnement d'un circuit d'affichage selon la revendication 1, comprenant en outre :

   l'acquisition (205) d'un paramètre de compensation de l'effet Mura du circuit d'affichage cible ; dans lequel la compensation (204) du paramètre de fonctionnement du circuit d'affichage cible, en fonction du paramètre de compensation du capteur de distance, pour acquérir un paramètre de fonctionnement compensé du circuit d'affichage cible, comprend : la compensation (2041) du paramètre de fonctionnement du circuit d'affichage cible en fonction du paramètre de compensation du capteur de distance et du paramètre de compensation de l'effet Mura du circuit d'affichage cible pour acquérir le paramètre de fonctionnement compensé du circuit d'affichage cible.

3. Procédé de compensation d'un paramètre de fonctionnement d'un circuit d'affichage selon la revendication 1, dans lequel

   le paramètre de fonctionnement du circuit d'affichage cible comprend une tension de fonctionnement $V_{data}$ du circuit d'affichage cible, une valeur de luminosité $Br$ du circuit d'affichage cible, une valeur gamma $\gamma$ du circuit d'affichage cible, et une tension de fonctionnement $V_{max}$ à la valeur maximale de luminosité du circuit d'affichage cible ; et

   la compensation (204) du paramètre de fonctionnement du circuit d'affichage cible en fonction du paramètre de compensation du capteur de distance pour acquérir un paramètre de fonctionnement compensé du circuit d'affichage cible comprend :

l'acquisition d'une tension de fonctionnement compensée $V_c$ du circuit d'affichage cible en fonction du

$$V_c = V_{data} + \left( \frac{(Br*m+n)}{65025} \right)^{\gamma} * \left( \frac{Br}{255} \right) * V_{max} * V_{data}$$

, où $m$ est une constante et $n$ est le paramètre de compensation du capteur de distance.

4. Procédé de compensation d'un paramètre de fonctionnement d'un circuit d'affichage selon la revendication 3, dans lequel l'acquisition (203) d'un paramètre de compensation du capteur de distance en fonction de la période de fonctionnement comprend :

au cas où la période de fonctionnement est supérieure ou égale à 100 heures et inférieure à 200 heures, la détermination du paramètre de compensation du capteur de distance comme $n = 0,8458$ ;
au cas où la période de fonctionnement est supérieure ou égale à 200 heures et inférieure à 300 heures, la détermination du paramètre de compensation du capteur de distance comme $n = 1,8458$ ; et
au cas où la période de fonctionnement est supérieure ou égale à 300 heures, la détermination du paramètre de compensation du capteur de distance comme $n = 2,8458$.

5. Procédé de compensation d'un paramètre de fonctionnement d'un circuit d'affichage selon la revendication 3, dans lequel la constante $n = 0,0009754$.

6. Appareil de compensation d'un paramètre de fonctionnement d'un circuit d'affichage, lequel est appliqué à un dispositif électronique comprenant un écran d'affichage et un capteur de distance disposé au-dessous de l'écran d'affichage, un circuit d'affichage cible étant disposé à une position correspondant à une position du capteur de distance, à savoir directement au-dessus ou dans une zone périphérique directement au-dessus du capteur de distance, **caractérisé en ce que** l'appareil est configuré pour mettre en oeuvre l'une quelconque des revendications 1 à 5.

7. Support de stockage non transitoire et lisible par ordinateur sur lequel sont stockées des instructions exécutables par ordinateur, dans lequel, lorsque les instructions sont exécutées par un processeur, le processeur est amené à mettre en oeuvre le procédé selon l'une quelconque des revendications 1 à 5.

8. Programme exécutable par ordinateur, lors de son exécution par un processeur, le processeur est amené à mettre en oeuvre le procédé selon l'une quelconque des revendications 1 à 5.

Fig. 1

Fig. 2a

acquiring an operating parameter of a target display unit on the display screen | 201

↓

acquiring an operation time period of the distance sensor | 202

↓

acquiring a compensation parameter of the distance sensor according to the operation time period | 203

↓

acquiring a mura compensation parameter of the target display unit | 205

↓

compensating the operating parameter of the target display unit according to the compensation parameter of the distance sensor and the mura compensation parameter of the target display unit to acquire the compensated operating parameter of the target display unit | 2041

Fig. 2b

Apparatus for Compensating an Operating Parameter of a Display Unit 30

Operating-Parameter Acquiring Module 301

Operation-Time-Period Acquiring Module 302

Sensor-Compensation-Parameter Acquiring Module 303

Operating-Parameter Compensating Module 304

Fig. 3a

Apparatus for Compensating an
Operating Parameter of a Display Unit
30

Operating-Parameter
Acquiring Module 301

Operation-Time-Period
Acquiring Module 302

Sensor-Compensation-
Parameter Acquiring Module
303

Operating-Parameter
Compensating Module 304

First Compensating
Sub-Module 3041

Mura-Compensation-
Parameter Acquiring Module
305

Fig. 3b

Apparatus for Compensating an
Operating Parameter of a Display Unit
30

Operating-Parameter
Acquiring Module 301

Operation-Time-Period
Acquiring Module 302

Sensor-Compensation-
Parameter Acquiring Module
303

Operating-Parameter
Compensating Module 304 304

Second Compensating
Sub-Module 3042

Fig. 3c

Apparatus for Compensating an
Operating Parameter of a Display Unit
30

Operating-Parameter
Acquiring Module 301

Operation-Time-Period
Acquiring Module 302

Sensor-Compensation-
Parameter Acquiring Module
303

Operating-Parameter
Compensating Module 304
Second
Compensating Sub-
Module 3042

First Sensor-
Compensation-
Parameter Acquiring
Sub-Module 3031

Second Sensor-
Compensation-
Parameter Acquiring
Sub-Module 3032

Third Sensor-
Compensation-
Parameter Acquiring
Sub-Module 3033

Fig. 3d

Apparatus for Compensating an Operating
Parameter of a Display Unit 40

401        402

Fig. 4

500

502

504

Memory

506

Power
Component

508

Multimedia
Component

510

Audio
Component

Processing
Component

Processor

520

Communication
Component

516

514

Sensor
Component

Input/Output
Interface

512

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8519971 B1